# EUROPÄISCHE PATENTSCHRIFT

(11) **EP 3 174 838 B1**
(45) Veröffentlichungstag und Bekanntmachung des Hinweises auf die Patenterteilung: **12.09.2018**
(21) Anmeldenummer: 15750655.1
(22) Anmeldetag: 29.07.2015
(51) Int. Cl.: C03B 5/43, C04B 35/632, C04B 35/638, C04B 35/66, C04B 38/00, C04B 111/28, C04B 35/14, C04B 35/63, C04B 35/64

(54) **VERFAHREN ZUR HERSTELLUNG EINES FEUERFESTEN MATERIALS MIT EINEM HOHEN SPEKTRALEN EMISSIONSGRAD, SOWIE VERFAHREN ZUR ERHÖHUNG DES SPEKTRALEN EMISSIONSGRADES FEUERFESTER FORMKÖRPER.**
PREPARATION PROCESS FOR A REFRACTORY MATERIAL WITH HIGH SPEKTRAL EMISSIVITY AND PROCESS FOR INCREASSING THE SPECTRAL EMISSIVITY OF REFRACTORY SHAPED BODIES.
PROCÉDÉ DE PRÉPARATION D'UN MATÉRIAU RÉFRACTAIRE À HAUTE ÉMISSIVITÉ SPECTRALE ET PROCÉDÉ POUR AUGMENTER L'ÉMISSIVITÉ SPECTRALE DE MATERIAUX RÉFRACTAIRES FORMÉS.

(30) Priorität: 01.08.2014 DE 102014215214
(43) Veröffentlichungstag der Anmeldung: 07.06.2017
(73) Patentinhaber: P-D Refractories GmbH, 01723 Wilsdruff (DE)
(72) Erfinder: BRUNK, Fred, 45525 Hattingen (DE)
(74) Vertreter: Köckeritz, Günter
(86) Internationale Anmeldenummer: PCT/EP2015/067361
(87) Internationale Veröffentlichungsnummer: WO 2016/016295

(56) Entgegenhaltungen:
- DE-B- 1 261 044
- GB-A- 880 582
- US-A1- 2012 208 142
- MICHAEL A. POSTLETHWAIT, ET. AL.: "High-Temperature, Normal Spectral Emittance of Silicon Carbide Based Materials", JOURNAL OF THERMOPHYSICS AND HEAT TRANSFER, Bd. 8, Nr. 3, 1. Juli 1994 (1994-07-01), - 1. September 1994 (1994-09-01), Seiten 412-420, XP9186169, USA

## Beschreibung

Die Erfindung betrifft ein Verfahren zur Herstellung eines feuerfesten Formkörpers, insbesondere eines gebrannten, feuerfesten Formkörper für Glasschmelzwannen nach dem Oberbegriff des Anspruchs1, sowie ein Verfahren zur Erhöhung des spektralen Emissionsgrades feuerfester Formkörper nach dem Oberbegriff des Anspruchs 8.

Brennstoffbefeuerte Glasschmelzwannen sind sehr energieintensive Hochtemperaturprozessanlagen, bei denen die zur Glasherstellung benötigten Rohstoffe von oben mit Brennern auf Temperaturen von oberhalb 1450°C, bei Kalk-Natron-Gläsern bis zu 1550°C, zu einer flüssigen Glasschmelze aufgeschmolzen werden. Die Wärmeübertragung auf die Glasschmelze erfolgt dabei fast ausschließlich durch Strahlung, sowohl direkt von der Brennerflamme bzw. den Verbrennungsgasen aus als auch indirekt über die heißseitige Oberfläche der feuerfesten Auskleidung oberhalb des Glasschmelzspiegels im Oberbau (Wannengewölbe und Seitenwände), welche als sekundäre Heizfläche wirkt. Hierbei kommt es zwangsläufig auch zur gegenseitigen Bestrahlung und zu Mehrfachreflexionen zwischen dem Gewölbe und den Wänden. Maßgeblich bestimmend für die Wärmeübertragung sind dabei die wellenlängen- und temperaturabhängigen Strahlungseigenschaften der am Strahlungsaustausch beteiligten Hauptkomponenten des Ofenraumes, d. h. der Ofenatmosphäre, dem feuerfesten Material und der Glasschmelze. Eine Beschreibung von Glasschmelzöfen findet sich z. B. In dem Buchwerk "Glasschmelzöfen" von W. Trier (ISBN 3- 540-12494-2).

Weil feuerfeste Werkstoffe selektive Strahlungseigenschaften aufweisen, ist die charakteristische Größe für deren Strahlungsverhalten der wellenlängen- und temperaturabhängige Emissionsgrad, welcher messtechnisch bestimmt werden muss. Für energetische Betrachtungen, wie z. B. Wärmeübergangsberechnungen, wird der hieraus über alle Wellenlängen gemittelte, temperaturabhängige Gesamtemissionsgrad benötigt. Maßgeblich ist hierbei der Wellenlängenbereich von ca. 1 µm bis 5 µm, weil bei den in Glasschmelzwannen vorherrschenden Temperaturen auf diesen Bereich aufgrund des Wienschen Verschiebungsgesetzes und des Planckschen Strahlungsgesetzes der größte Anteil der durch Strahlung übertragenen Energie entfällt. Die spektralen Emissionsgrade sind in erster Linie von der chemischen und mineralogischen Zusammensetzung des feuerfesten Materials abhängig. Der Emissionsgrad kann Werte zwischen 0 und 1 annehmen, wobei Letzterer einen physikalischen Idealzustand darstellt (sog. schwarzer Körper).

Schmelzwannen zur Herstellung von Kalk-Natron-Glas, dem bei weitem dominierenden Anteil an der Glasgesamtproduktion, werden im Wannenoberbau, insbesondere im Wannengewölbe, mit dichten Silikasteinen zugestellt. Aufgrund der für den Einsatz im Gewölbe bei Temperaturen von ca. 1500°C bis 1600°C erforderlichen ausgezeichneten thermomechanischen Materialeigenschaften werden ausschließlich flussmittelarme Silikasteinqualitäten mit einem SiO₂-Gehalt von mindestens 93 %, in der Regel oberhalb von 95 %, verwendet. Ein weiterer, technisch maßgeblicher Grund für ihre Verwendung ist das gutartige Auflösungsverhalten von Silikasteinbestandteilen in Kontakt mit der Glasschmelze. Im Bereich der mechanisch deutlich geringer belasteten Wände werden auch korrosionsbeständigere Alumina-Zirkonia-Silika-Steine (schmelzgegossene AZS-Steine) eingesetzt, die neben den Hauptbestandteilen Al₂O₃ und ZrO₂ einen geringen SiO₂-Gehalt von ca. 12 % bis 16 % besitzen. Hierbei Ist allerdings u. a. die Gefahr eines einsatzbedingten Ausschwitzens der Glasphase aus dem Steinmaterial zu beachten, welche sich in der Glasschmelze schwer auflöst und zu Schlierenbildung oder anderen Glasfehlern führt. Eine Übersicht über Silikasteine und AZS-Materialien gibt z. B. das Buch "Handbook of Refractory Materials", Hrsg. G. Routsohka u. H. Wuthnow (ISBN 978-3-8027-3162-4).

Für die Herstellung von hochwärmeleitenden Silikasteinen mit sehr geringer Porosität ist aus der US 4,183,761 bekannt, als Versatzkomponente 0,5 bis 10 Gew.-% Siliziumnitrid (Si₃N₄, auch Si₂ON₂ enthaltend) oder Siliziumcarbid (SiC) oder eine Mischung aus beiden mit einer Korngröße kleiner 0,074 mm zu verwenden und beim Brennprozess zwischen 1200°C und 1400°C eine sehr komplizierte Temperaturführung und ganz spezielle Ofenatmosphäre einzuhalten. Hierdurch wird gewährleistet, dass sich während des Steinbrandes das notwendigerweise sehr feinkörnige Nitrid und/oder Carbid unter Volumenzunahme vollständig zu SiO₂ umwandelt, welches die Matrixporen ausfüllt und somit ein dichteres Steingefüge gebildet wird. Die gemäß dieser Patentschrift hergestellten Steine entsprechen hinsichtlich der chemisch-mineralogischen Zusammensetzung und der Strahlungseigenschaften konventionellen Silikasteinen. Hochwärmeleitende Silikasteine sind für einen Einsatz in der Glaswanne, insbesondere im Gewölbe, wärmetechnisch betrachtet allerdings äußerst kontraproduktiv, weil hierdurch bei sonst gleichbleibendem Aufbau der Gewölbeisolierung die Wärmeverluste zunehmen würden und eine Verbesserung der Strahlungseigenschaften mit derartigen Steinen nicht erreicht werden kann.

Bei Einsatz der Feuerfestmaterialien Silika und AZS ist es allerdings im Hinblick auf die Wärmeübertragung von großem Nachteil, dass deren Gesamtemissionsgrad bekanntermaßen mit steigender Temperatur stark abnimmt. Es ist naheliegend, dass durch eine Verbesserung der Strahlungseigenschaften der feuerfesten Auskleidung im Oberbau die Strahlungswärmeübertragung auf die Glasschmelze intensiviert wird und somit Energieeinsparungen und/oder Produktivitätssteigerungen darstellbar sind.

Hierzu ist deshalb bereits vorgeschlagen worden, die dem Feuerraum zugewandte (im Einsatz heißseitige) Oberfläche des feuerfesten Materials zu beschichten, wobei vorausgesetzt wird, dass die Beschichtung einen höheren Emissionsgrad aufweist als das feuerfeste Substrat. Diese Beschichtungsmittel (sog. Hochemissions-Coatings) bestehen im Wesentlichen aus einem pulverförmigen, feuerfesten Füllstoff (bzw. Füllstoffgemisch), mindestens einem Bindemittel und mindestens einem pulverförmigen Mittel mit hohem Emissionsgrad (Hochemissionsmittel). Das Beschichtungsmittel wird vor der Inbetriebnahme der Glasschmelzwanne in einer farbenähnlichen Konsistenz dünnschichtig auf das feuerfeste Substrat gesprüht oder gestrichen.

In der Patentschrift US 6,007,873 wird beispielsweise ein Hochemissions-Coating für eine Einsatztemperatur von oberhalb 1000°C vorgeschlagen, welches aus einem aluminiumphosphathaltigen Bindemittel und einem

Hochemissionsmittelzusatz von 5 Gew.-% bis 75 Gew.-% an Seltene Erden Oxide der Gruppe Cerium (Cer) und Terbium besteht. Derartige Beschichtungen haben generell eine Dicke von 10 µm bis 250 µm. Im Gegensatz zu Ceriumoxid (CeO₂ und/oder Ce₂O₃) haben die Hochemissionsmittel Chromoxid (Cr₂O₃) und Siliziumcarbid (SiC) bei einer vergleichenden Evaluation mit Einsatztemperaturen von 1400°C bis 1500°C reaktionsbedingt versagt. Angaben zum tatsächlichen Strahlungsverhalten der ceriumoxidhaltigen Beschichtung sowie zum Substrat werden nicht gemacht, erzielte Effekte werden nur indirekt als Verbesserung der Gesamteffizienz eines Ofens angegeben.

Aus der US 6,921,431 B2 ist ein Wärmeschutzüberzug (Thermal Protective Coating) unter anderem für feuerfeste Materialien bekannt, der insbesondere auch den Emissionsgrad des beschichteten Substrates erhöhen soll und bezogen auf die Trockensubstanz unter anderem einen Anteil von ca. 2 Gew.-% bis ca. 20 Gew.-% eines oder mehrerer Hochemissionsmittel aufweist wie Siliziumhexaborid (SiB₆), Borcarbid (B₄C), Siliziumtetraborid (SiB₄), Siliziumcarbid (SiC), Molybdändisilizid (MoSi₂), Wolframdisilizid (WSi₂), Zirkoniumdiborid (ZrB₂), Kupferchromit (Cr₂Ce₂O₅) und Metalloxide. Das Bindemittel ist kolloidales Silika und/oder Alumina, ein bevorzugt tonmineralischer Stabilisatorzusatz von ca. 1,5 Gew.-% bis ca. 5 Gew.-% soll die Lagerfähigkeit der fertig aufbereiteten Beschichtungslösung erhöhen (Feststoffgehalt ca. 40 % bis ca. 70 %). Um ein Abblättern zu vermeiden, wird eine maximale Beschichtungsstärke im getrockneten Zustand von ca. 25,4 µm bis 254 µm empfohlen; als optimale Schichtdichte werden 150 g bis 200 g Trockensubstanz pro m² Substratoberfläche genannt. Die Beschichtung soll Wärme bei Einsatztemperaturen von bis zu 3500°F (1926°C) rückstrahlen. Verifizierte Angaben zum Strahlungsverhalten oder zumindest ein Nachweis über die Funktionalität werden allerdings nicht angeführt.

Die feuerfeste Auskleidung im Glasschmelzwannenoberbau wird im betrieblichen Einsatz mit Wannenlaufzeiten von ca. 8 bis 14 Jahre aufgrund der starken thermischen und korrosiven Belastungen, insbesondere durch Reaktion mit den mit Gemengekomponenten und Verdampfungsprodukten beladenen Ofengasen, mehr oder weniger stark korrodiert, unter anderem dadurch gekennzeichnet, dass sukzessive Material abgetragen wird. Der Materialabtrag kann bei Silikasteinen z. B. im Gewölbe eine Gesamtstärke von mehreren Zentimetern aufweisen. Die Nutzungsdauer einer dünnen, sehr feinkörnigen und daher wenig korrosionsbeständigen Beschichtung ist demzufolge sehr begrenzt. Unzureichende mechanische Eigenschaften der Beschichtung und/oder eine schlechte Haftung auf dem Substrat und/oder eine mangelnde Oxidationsbeständigkeit des verwendeten Hochemissionsmittels, wie aber auch einsatzbedingte Reaktionen zwischen der Beschichtung und dem feuerfesten Substrat wirken sich ebenfalls stark negativ auf die Nutzungsdauer aus. Besonders zu beachten ist, dass bereits eine geringe Menge an Beschichtungsmaterial, welches in die Glasschmelze gelangt, zu Glasfehlern führt, wenn die chemische Zusammensetzung der Beschichtung stark von der des Glases abweicht.

Eine weitere Möglichkeit zur Verbesserung der Strahlungswärmeübertragung in einer Glasschmelzwanne ist aus der DE 28 14 250 C2 bekannt, wonach durch eine besondere Innenraumseitige Oberflächenprofilierung der feuerfesten Steinblöcke im Oberbau eine vergrößerte Wärmeabstrahlfläche erreicht werden soll. Hierfür sind die Vertiefungen pyramiden- oder kegelstumpfförmig ausgebildet, wobei deren größter Querschnitt zur innenraumseitigen Oberfläche hin gerichtet ist. Eine höhere Abstrahlfläche und insbesondere auch der Umstand, dass die Vertiefungen sich wie Reflektoren verhalten sollen, welche die ausgestrahlte thermische Energie bündeln, sollen bewirken, dass größere Wärmestrahlungsanteile vorn Oberbau in den Ofeninnenraum emittiert werden. Bei dieser Ausführungsform ist jedoch der weitaus überwiegende Anteil der zum Ofenrauminneren gerichteten Oberfläche der feuerfesten Auskleidung noch nach wie vor glatt und gleichmäßig ausgebildet, woraus sich gemäß den allgemeinen Lehren der Wärmestrahlungsübertragung theoretisch allenfalls nur eine geringe Verbesserung des Gesamtstrahlungsvermögens ableiten lässt. Nicht zuletzt auch aufgrund dessen wird die Effizienz dieser Art der Oberflächenprofilierung nach wie vor in Fachkreisen kontrovers diskutiert.

In der DE 1 261 044 wird ein feuerfester Silikastein mit hoher Abplatzfestigkeit und hoher Beständigkeit gegenüber Schlackeneinflüssen beschrieben. Zur Erzielung dieser Eigenschaften weist der Stein neben Siliziumkarbid und Quarzit 1 bis 10 Gewichtsprozent TiO₂ auf.
In der GB 880 582 A wird ein feuerfester gebundener Silikastein offenbart, der neben SiO₂, SiC und Ammoniumverbindungen enthält. Dadurch soll eine geringe Porosität erzielt werden.

Aufgabe der Erfindung ist, ein Verfahren zur Herstellung eines feuerfesten, geformten Materials für den Oberbau von Glasschmelzwannen aufzuzeigen, durch welches ein Stein mit einem verbesserten Wärmestrahlungsvermögen zur Verfügung gestellt wird. Aufgabe der Erfindung ist ferner, ein Verfahren vorzustellen, mit dessen Hilfe der spektrale Emissionsgrad feuerfester Formkörper erhöht werden kann.

Diese Aufgaben werden durch die Ansprüche 1 und 8 gelöst. Vorteilhafte Weiterbildungen der Erfindung sind in den jeweiligen abhängigen Unteransprüchen enthalten.

Die Erfindung wird beispielhaft anhand einer Zeichnung erläutert. Verglichen wird das Strahlungsverhalten eines erfindungsgemäßen Formkörpers (1) mit dem von handelsüblichen Materialien für den Oberbau von Glasschmelzwannen, einem Silikasteln (2) und einem schmelzgegossenen AZS-Material (3). Es zeigen dabei:

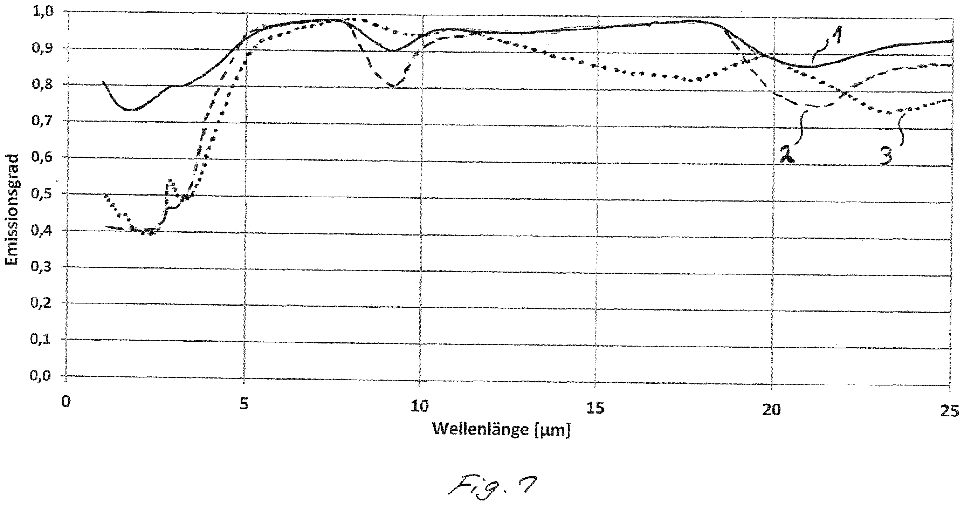

Fig. 1 die spektralen Emissionsgrade (Messtemperatur 1200°C),

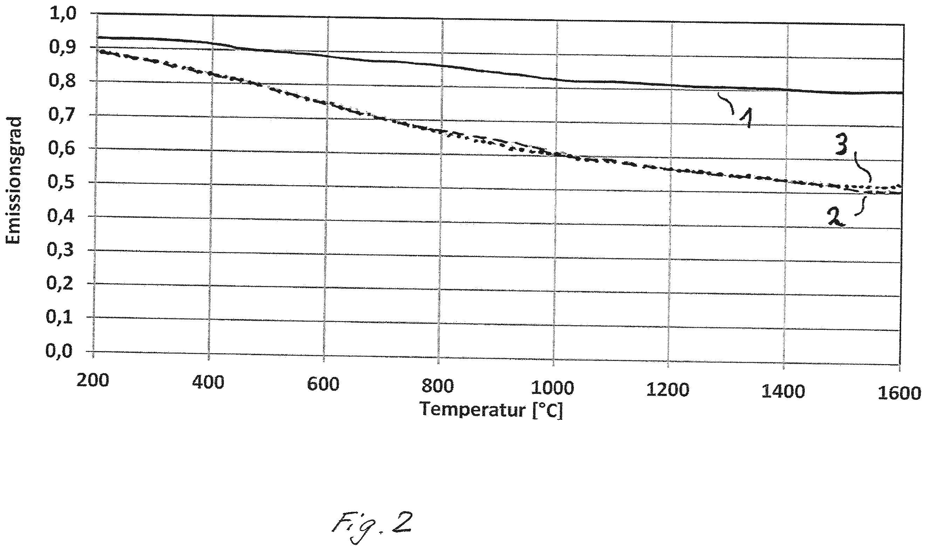

Fig. 2 die entsprechenden temperaturabhängigen Gesamtemissionsgrade.

Das hierbei, wie auch bei den Ausführungsbeispielen dieses Schriftsatzes, verwendete Messprinzip zur Ermittlung der spektralen Emissionsgrade basiert auf dem Vergleich der spektralen Strahlungswärmestromdichte des Probenmaterials mit der des schwarzen Strahlers bei gleicher Temperatur und bei identischen optischgeometrischen Bedingungen (sog. statisches Strahlungsvergleichsprinzip). Aus dem bei einer Temperatur gemessenen spektralen Emissionsgrad wird der über die Wellenlängen gemittelte, dieser Temperatur entsprechende Gesamtemissionsgrad errechnet.

Der Erfindung liegt die überraschende Erkenntnis zugrunde, dass das Wärmestrahlungsvermögen eines gebrannten, feuerfesten Formkörpers messbar signifikant verbessert werden kann, wenn eine Substanz mit hohem Emissionsgrad verteilt in der Matrix des Formkörpers eingebracht vorliegt, wobei die Substanz kompatibel mit der Matrix ist. Im Gegensatz zu einer einseitig aufgebrachten Beschichtung ist beim erfindungsgemäßen Material das Hochemissionsmittel bereits ein Bestandteil des Materialgefüges, woraus resultiert, dass der gesamte Formkörper ein verbessertes Strahlungsvermögen besitzt und ein einsatzbedingter Materialabtrag infolge vorherrschender korrosiver Beanspruchungen nicht den Verlust des verbesserten Strahlungsvermögens zur Folge hat wie im Falle einer dünn beschichteten Materialoberfläche. Des Weiteren kann das erfindungsgemäße Material genauso wie konventionell im Wannenoberbau verwendete feuerfeste Steine zugestellt werden.

Die Erfindung sieht die Verwendung von Siliziumcarbid als hochtemperaturbeständiges, nichtoxidisches Hochemissionsmittel vor. Siliziumicarbid (SiC) wird üblicherweise durch eine carbothermische Reduktion und Aufkohlung von hochreinem Quarzsand (SiO₂) mit Petrolkoks bei 2000°C bis 2400°C nach dem sog. Acheson-Verfahren hergestellt. Charakteristisch für SiC im Hochtemperatureinsatz bei Temperaturen von bis zu ca. 1600°C ist die Ausbildung einer passivierenden Schicht aus Siliziumdioxid infolge der Reaktion mit Luftsauerstoff aus der Ofenatmosphäre (sog. passive Oxidation). Dieser Vorgang findet bereits bei der Herstellung des erfindungsgemäßen Materials während eines herkömmlichen Brandes statt. Überraschenderweise hat sich herausgestellt, dass die sich um den verbleibenden SiC-Kern, d. h. dem Hochemissionsmittel, gebildete SiO₂-Schutzschicht durch einen erfindungsgemäßen hohen SiO₂-Gehalt in der Matrix von mindestens 90 Gew.-%, vorzugsweise mindestens 94 Gew.-%, entscheidend verstärkt bzw. vor Korrosion geschützt wird (Kompatibilität). Dieses gilt insbesondere auch für die Oberfläche bzw. für das an die Oberfläche angrenzende Gefüge des Formkörpers, welche letztendlich das Strahlungsverhalten im späteren Einsatz bestimmt. Als vorteilhaft hat sich die Verwendung von SIC in der Korngröße kleiner 1,5 mm, vorzugsweise kleiner 1 mm, erwiesen.

Nachdem im Rahmen der Erfindung die positive Wirkung des SiO₂ erkannt worden ist, liegt ein vorteilhafter Aspekt einer besonderen Ausführungsform der Erfindung darin, SiC-Körner zu verwenden, welche bereits eine SiO₂-Schutzschicht aufweisen, vorzugsweise durch Einsatz von Recycling-Material, wie beispielsweise Brennhilfsmitteln.

Der hohe SiO₂-Gehalt in der Matrix bewirkt u. a. auch, dass das erfindungsgemäße Material die für einen Hochtemperatureinsatz erforderlichen thermomechanischen Eigenschaften, insbesondere das Druckfließverhalten, erhält, Dieses wird durch einen herkömmlichen Herstellungsbrand sichergestellt, wobei aus den verwendeten SiO₂-Rohstoffen weitestgehend die kristallinen SiO₂-Bestandteile Tridymit und/oder Cristobalit in der Matrix gebildet werden.

Rohstoffbasis für die Ausbildung der Matrix des erfindungsgemäßen Materials ist amorphes SiO₂ oder kristallines SiO₂ oder eine Mischung aus beiden In einer für feuerfeste, grobkeramische Werkstoffe üblichen Körnung von 0 - 6 mm, vorzugsweise 0 - 4 mm. Beispielsweise werden als amorphes SiO₂ transparentes Quarzglas (Kieselgut) oder trübes Quarzgut (Kieselgut) oder ein Gemisch aus beiden verwendet, die SiO₂-Gehalte liegen bei größer 99 Gew.-%. Beim Steinbrand findet oberhalb einer Temperatur von ca. 1150°C eine Umwandlung zu Cristobalit statt. Als kristalline Rohstoffe werden vorzugsweise natürliche, mineralogisch aus β-Quarz bestehende Quarzite, Quarzsande und Quarzmehle mit SiO₂-Gehalten größer 96 Gew.-% einzeln oder als Mischung eingesetzt. Bei einem hohen Anteil an quarzreichen Rohstoffen ist ein angemessener Zusatz eines Mineralisators notwendig, welcher beim Formkörperbrand die erforderliche weitestgehende Umwandlung des Quarzes in Cristobalit und Tridymit in wirtschaftlicher Weise fördert und nicht durch eine Reaktion mit dem Hochemissionsmittel dessen Strahlungseigenschaften zerstört. Z. B. erfüllt Kalkhydrat Ca(OH)₂ diese Kriterien und hat sich als besonders geeignet erwiesen, weil es zusätzlich auch als Bindemittel wirkt.

Nach der Erfindung wird das siliziumcarbidhaltige Hochemissionsmittel mit mindestens einem gekörnten SiO₂-Rohstoff und mit einem geeigneten Bindemittel oder Bindemittelgemisch, ggf. in Kombination mit Wasser, gemischt, so dass eine pressfähige Masse entsteht. Als Bindemittel können z.B. Ligninsulfonate (Sulfitablauge), Dextrin, Kalkhydrat und Phosphate verwendet werden. Die SiO₂-aufweisenden Rohstoffe werden dabei so zusammengestellt, dass mindestens 78 Gew.-% SiO₂ in der trockenen Masse vorliegt, wobei berücksichtigt wird, dass die Matrix des anschließend geformten, getrockneten und gebrannten Materials mindestens 90 Gew.-% SiO₂, vorzugsweise mindestens 94 Gew.-%, aufweist. Der Anteil an carbidhaltiger Substanz in der Mischung wird derart bemessen, dass 0,2 Gew.-% bis 20 Gew.-%, vorzugsweise 0,3 Gew.-% bis 15 Gew.-%, bezogen auf das gebrannte Material, vorhanden sind.

Die aufbereitete Masse wird z.B. zu Steinen geformt und die Steine getrocknet. Anschließend werden die Steine bei allgemein für SiO₂-reiche, feuerfeste Materialien üblichen Bedingungen bei Sintertemperaturen oberhalb von 1200°C, vorzugsweise zwischen 1300°C und 1550°C, gebrannt. Die auf dieser Weise behandelten Steine haben eine Matrix ausgebildet, weiche zweckmäßigerweise überwiegend kristallin Ist, d. h. Cristobalit oder Tridymit oder eine Mischung aus beiden aufweist, wobei der Quarzgehalt möglichst gering ist, vorzugsweise kleiner 1 Gew.-%.

Die folgenden Ausführungsbeispiele werden zur Veranschaulichung angegeben und sind nicht dazu gedacht, den Schutzumfang der Erfindung einzuschränken.

Beispiele 1 bis 3: Die körnigen Rohstoffkomponenten röntgenamorphes Quarzgut mit einem Maximalkern von 4 mm und einer typischen Korngrößenverteilung, und verschiedene Mengen SiC der Korngröße 0-1 werden zusammen als 100 Gew.-% unter Zugabe von zusätzlich 1 Gew.-% Sulfitablauge und 3,5 Gew.-% Wasser homogen vermischt. Die Anteile an SiC betragen 0 Gew.-% (Beispiel 1), 5 Gew.-% (Beispiel 2) und 15 Gew.-% (Beispiel 3), wobei bei Zugabe von 0 Gew.-% und 5 Gew.-% der jeweils auf 15 Gew.-% SiC fehlende Anteil durch Quarzgut in der entsprechenden Körnung ersetzt wird. Die so erhaltenen Mischungen werden bei ca. 80 MPa Pressdruck zu Formkörpern verpresst. Nach einer Trocknung bei 110°C bis zur Gewichtskonstanz werden die Formlinge bei einer Sintertemperatur von ca. 1450°C gebrannt. Bei den gebrannten Formkörpern liegt der röntgendiffraktometrisch ermittelte Anteil an kristallinem SiO₂ (Cristobalit) bei größer 50 Gew.-%.

Beispiele 4 bis 6: Im Vergleich zu Beispiel 1 bis 3 wird als SiO₂-Rohstoffkomponente kristallines SiO₂ mit einem Maximalkorn von 3 mm eingesetzt und die Anteile an SiC in der Körnung 0 -1 mm betragen 0 Gew.-% (Beispiel 4), 0,5 % Gew. -% (Beispiel 5) und 5 Gew.-% (Beispiel 6). Der jeweils auf 5 Gew.-% SiC fehlende Anteil wird durch kristallines SiO₂ in der entsprechenden Körnung ersetzt. Zusätzlich werden 0,5 Gew.-% Sulfitablauge, 4 Gew.-% Wasser und ca. 3 Gew.-% Kalkhydrat zugesetzt und bis zur Homogenität vermischt. Die bei ca. 80 MPa Pressdruck gepressten und anschließend bis zur Gewichtskonstanz bei 110°C getrockneten Formkörper werden bei einer Sintertemperatur von ca. 1450°C gebrannt. Der Anteil an nicht umgewandelten Quarz liegt bei den gebrannten Formkörpern bei unter 1 Gew.%.

Die ermittelten maßgeblichen Eigenschaften zeigt nachfolgende Tabelle. Als kennzeichnende Größe Für das Strahlungsverhalten ist der über alle Wellenlängen gemittelte Gesamtemissionsgrad bei 1600°C angeführt.

| Merkmal | Beispiel 1 | Beispiel 2 | Beispiel 3 | Beispiel 4 | Beispiel 5 | Beispiel 6 |
|---|---|---|---|---|---|---|
| SiO₂-Rohstoffbasis | amorph | amorph | amorph | kristallin | kristallin | kristallin |
| Rohdichte (g/cm³) | 1,83 | 1,87 | 1,89 | 1,83 | 1,84 | 1,83 |
| Offene Porosität (%) | 19,9 | 19,2 | 20,7 | 21,1 | 20,8 | 21,1 |
| Kaltdruckfestigkeit (MPa) | 22 | 24 | 23 | 47 | 45 | 49 |
| SiO₂-Gehalt (Gew.-%) | 99,7 | 94,9 | 85,3 | 96,2 | 95,8 | 92,3 |
| SiC-Gehalt (*) (Gew.-%) | --- | 4,77 | 14,30 | --- | 0,38 | 3,81 |
| Gesamtemissionsgrad bei 1600°C (o.D.) | 0,51 | 0,72 | 0,80 | 0,50 | 0,62 | 0,72 |
| Zunahme | --- | +41 % | +57% | --- | +24 % | +44 % |

| | | | | | | |
|---|---|---|---|---|---|---|
| (*) nach DIN EN ISO 21068-1/2 | | | | | | |

Die Strahlungseigenschaften der gebrannten, nicht erfindungsgemäßen Formkörper aus Beispiel 1 und 4 entsprechen denen konventioneller Silikasteine, wobei der Formkörper aus Beispiel 4 auch hinsichtlich der weiteren Eigenschaften mit einem konventionellen Silikasteinmaterial für den Einsatz im Oberbau von Glasschmelzwannen vergleichbar ist. Aus den Beispielen erkennt man ohne weiteres, dass durch den erfindungsgemäßen Einbau des Hochemissionsmittels in der Formkörpermatrix die Strahlungseigenschaften messbar sehr wirksam verbessert werden. Überraschenderweise bewirkt bereits eine sehr geringe Hochemissionsmittelmenge in der Matrix eine drastische Verbesserung, wie aus dem Vergleich der Gesamtemissionsgrade bei 1600°C der Beispiele 4 und 5 ersichtlich ist.

Alle gebrannten, erfindungsgemäßen Formkörper (Beispiel 2, 3, 5 und 6) zeigen ein, konventionellen Silikasteinen entsprechendes, ausgezeichnetes Druckfließverhalten nach EN 993-9 auf, dadurch gekennzeichnet, dass bei einer Prüftemperatur von 1600°C und einer Belastung von 0,2 MPa das Fließen zwischen der 5 und 25 h Haltezeit kleiner 0,2 % beträgt.

Ein gemäß Beispiel 3 hergestellter, erfindungsgemäßer Formkörper ist in einem elektrisch beheizten Ofen 100 h lang mit einer Temperatur von 1600 °C beaufschlagt worden. Die nachfolgend gemessenen Strahlungseigenschaften entsprechen denen des ursprünglichen Formkörpers. Des Weiteren sind erfindungsgemäße Formkörper, gemäß Beispiel 2 und 6 hergestellt, unter realen Bedingungen im Oberbau einer Glasschmelzwanne für Kalk-Natron-Glas für etwas mehr als einen Monat lang eingesetzt worden. Die anschließend gemessenen Strahlungseigenschaften der Formkörperoberfläche, welche der heißen Ofenatmosphäre ausgesetzt gewesen war, entsprechen ebenfalls denen des ungebrauchten, ursprünglichen Materials.

Aus den Ausführungsbeispielen erkennt man ohne weiteres, dass die Erfindung mit einfachen Mitteln eine Verbesserung schafft, die ungewöhnlich ist und in keiner Weise vorhersehbar war.

## Patentansprüche

1. Verfahren zur Herstellung eines feuerfesten Materials für den Einsatz im Oberbau von Glasschmelzwannen, welches als Hauptkomponenten SiO₂, SiC sowie ein Bindemittel oder Bindemittelgemisch enthält und das Material einen Gehalt an folgenden Komponenten aufweist: Siliziumcarbid von 0,2 Gew.-% bis 20 Gew.-%; Siliziumoxid von mindestens 78 Gew.-% bis maximal 6 Gew.-% und Sonstiges, wobei die Summe der Komponenten 100 Gew.-% beträgt; daduch gekennzeichnet, dass in die Matrix des feuerfesten Materials eine körnige Substanz eingebaut wird, welche im Spektralbereich von 1 µm bis 5 µm und bei Temperaturen oberhalb 1000°C ein spektrales Emissionsvermögen aufweist, welches höher ist als das spektrale Emissionsvermögen der Matrix des feuerfesten Materials.

2. Verfahren nach Anspruch 1, **dadurch gekennzeichnet, dass** die körnige Substanz siliziumcarbidhaltig ist und mit mindestens einem gekörnten SiO₂-Rohstoff und einem Bindemittel oder Bindemittelgemisch zu einer pressfähigen Masse gemischt, zu Steinen abgeformt wird, die Steine getrocknet und anschließend gebrannt werden.

3. Verfahren nach Anspruch 2, **dadurch gekennzeichnet, dass** als siliziumcarbidhaltige Substanz SiC in einer Korngröße <1,5 mm, vorzugsweise < 1 mm zugemischt wird, wobei der Gehalt an Siliziumcarbid im Material 0,2 Gew.-% bis 20 Gew.-%, vorzugsweise 0,3 Gew.-% bis 15 Gew.-%, beträgt und als Bindemittel oder Bindemittelgemisch Ligninsulfonate, Dextrin, Kalkhydrat, Phosphate bzw. äquivalent wirkende Mittel mit einem Anteil in der Zusammensetzung von maximal 6 Gew.-% zugemischt werden.

4. Verfahren nach den Ansprüchen 2 bis 3, **dadurch gekennzeichnet, dass** die siliziumcarbidhaltige Substanz eine SiO₂-Schicht aufweist.

5. Verfahren nach einem der o.g. Ansprüche 2 bis 4, **dadurch gekennzeichnet, dass** als siliziumcarbidhaltige Substanz Recyclingmaterial, vorzugsweise Brennhilfsmittel eingesetzt wird.

6. Verfahren nach einem oder mehreren Ansprüchen 1 bis 5, **dadurch gekennzeichnet, dass** als SiO₂ Rohstoff amorphes oder kristallines SiO₂ oder eine Mischung aus beiden mit einem SiO₂-Gehalt von mindestens 96 Gew.-%, in einer Körnung von 0 - 6 mm, vorzugsweise 0 - 4 mm in einer Menge von mindestens 78 Gew.-% verwendet wird.

7. Verfahren nach einem oder mehreren Ansprüchen 2 bis 6, **dadurch gekennzeichnet, dass** die Steine oberhalb von 1200°C gebrannt werden, vorzugsweise zwischen 1300°C und 1550°C.

8. Verfahren zur Erhöhung des spektralen Emissionsgrades geformter, gebrannter, feuerfester Materialien, **dadurch gekennzeichnet, dass** in die Matrix des feuerfesten Materials eine Substanz eingebettet wird, welche im Temperaturbereich oberhalb von 1000°C einen Gesamtemissionsgrad aufweist, der um mindestens 15% höher ist als der Emissionsgrad der Matrix des feuerfesten Materials.

9. Verfahren nach Anspruch 8, **dadurch gekennzeichnet, dass** es sich bei dem feuerfesten Material um Silikasteine für den Einsatz im Oberbau und Seitenwänden von Glasschmelzwannen handelt.

10. Verfahren nach den Ansprüchen 8 und 9, **dadurch gekennzeichnet, dass** das feuerfeste Material einen Siliziumdioxidgehalt von mindestens 78 Gew.-% aufweist und in die Matrix des feuerfesten Materials eine körnige siliziumcarbidhaltige Substanz verteilt wird, wobei der Gehalt an Siliziumcarbid im Material 0,2 Gew.-% bis 20 Gew.-%, vorzugsweise 0,3 Gew.-% bis 15 Gew.-%, beträgt und maximal 6 Gew.-% Sonstiges aufweist, wobei die Summe 100 Gew.-% beträgt.

11. Verfahren nach den Ansprüchen 8 bis 10, **dadurch gekennzeichnet, dass** die Matrix einen SiO₂-Gehalt von mindestens 90 Gew.-%, vorzugsweise mindestens 94 Gew.-% aufweist.

12. Verfahren nach den Ansprüchen 10 bis 11, **dadurch gekennzeichnet, dass** die siliziumcarbidhaltige Substanz mit mindestens einem gekörnten SiO₂-Rohstoff und einem Bindemittel oder Bindemittelgemisch wie Ligninsulfonate, Dextrin, Kalkhydrat, Phosphate oder äquivalent wirkende Mittel unter Zugabe von Wasser zu einer pressfähigen Masse gemischt, zu Steinen abgeformt wird, die Steine getrocknet und anschließend oberhalb von 1200°C gebrannt werden.

13. Verfahren nach den Anspruch 12, **dadurch gekennzeichnet, dass** die Steine zwischen 1300°C und 1550°C gebrannt werden.

14. Verfahren nach mindestens einem der Ansprüche 10 bis 13, **dadurch gekennzeichnet, dass** als siliziumcarbidhaltige Substanz SiC eingesetzt wird.

15. Verfahren nach mindestens einem der Ansprüche 10 bis 14, **dadurch gekennzeichnet, dass** als siliziumcarbidhaltige Substanz SiC (Siliziumcarbid) eingesetzt wird, welches eine SiO₂-Oberflächenschicht aufweist.

16. Verfahren nach mindestens einem der Ansprüche 10 bis 15, **dadurch gekennzeichnet, dass** als siliziumcarbidhaltige Substanz ein Recyclingmaterial vorzugsweise aus Brennhilfsmitteln eingesetzt wird.

17. Verfahren nach einem oder mehreren Ansprüchen 12 bis 16, **dadurch gekennzeichnet, dass** als SiO₂-Rohstoff amorphes oder kristallines SiO₂ oder eine Mischung aus beiden in einer Menge von mindestens 78 Gew.-% zugemischt wird.

## Claims

1. Process for producing a refractory material for use in the superstructure of glass melting tanks, which contains, as main components, SiO₂, SiC and also a binder or binder mixture, and the material has a content of the following components: silicon carbide from 0.2% by weight to 20% by weight; silicon oxide from at least 78% by weight to not more than 6% by weight and miscellaneous substances, with the total of the components being 100% by weight; **characterized in that** a particulate substance which in the spectral range from 1 µm to 5 µm and at temperatures above 1000°C has a spectral emission capability which is higher than the spectral emission capability of the matrix of the refractory material is incorporated into the matrix of the refractory material.

2. Process according to Claim 1, **characterized in that** the particulate substance comprises silicon carbide and is mixed with at least one particulate SiO₂ raw material and a binder or binder mixture to form a pressable composition, shaped to give bricks, the bricks are dried and subsequently fired.

3. Process according to Claim 2, **characterized in that** SiC having a particle size of < 1.5 mm, preferably < 1 mm, is mixed in as substance comprising silicon carbide, where the content of silicon carbide in the material is from 0.2% by weight to 20% by weight, preferably from 0.3% by weight to 15% by weight, and lignosulfonates, dextrin, calcium hydroxide, phosphates or substances having an equivalent effect are mixed in with a proportion in the composition of not more than 6% by weight as binder or binder mixture.

4. Process according to any of Claims 2 to 3, **characterized in that** the substance comprising silicon carbide has an SiO₂ layer.

5. Process according to any of the preceding Claims 2 to 4, **characterized in that** recycled material, preferably kiln furniture, is used as substance comprising silicon carbide.

6. Process according to one or more of Claims 1 to 5, **characterized in that** amorphous or crystalline SiO₂ or a mixture of the two having an SiO₂ content of at least 96% by weight and a particle size of 0 - 6 mm, preferably 0 - 4 mm, is used in an amount of at least 78% by weight as SiO₂ raw material.

7. Process according to one or more of Claims 2 to 6, **characterized in that** the bricks are fired at above 1200°C, preferably in the range from 1300°C to 1550°C.

8. Method of increasing the spectral emissivity of shaped, fired, refractory materials, **characterized in that** a substance which at the temperature range above 1000°C has a total emissivity which is at least 15% higher than the emissivity of the matrix of the refractory material is embedded in the matrix of the refractory material.

9. Method according to Claim 8, **characterized in that** the refractory material is silica bricks for use in the superstructure and side walls of glass melting tanks.

10. Method according to Claim 8 or 9, **characterized in that** the refractory material has a silicon dioxide content of at least 78% by weight and a particulate substance comprising silicon carbide is dispersed in the matrix of the refractory material, where the quantity of silicon carbide in the material is from 0.2% by weight to 20% by weight, preferably from 0.3% by weight to 15% by weight, and comprises not more than 6% by weight of miscellaneous substances, with the total being 100% by weight.

11. Method according to any of Claims 8 to 10, **characterized in that** the matrix has an SiO₂ content of at least 90% by weight, preferably at least 94% by weight.

12. Method according to any of Claims 10 to 11, **characterized in that** the substance comprising silicon carbide is mixed with at least one particulate SiO₂ raw material and a binder or binder mixture such as lignosulfonates, dextrin, calcium hydroxide, phosphates or substances having an equivalent effect with addition of water to form a pressable composition, shaped to give bricks, the bricks are dried and subsequently fired at above 1200°C.

13. Method according to Claim 12, **characterized in that** the bricks are preferably fired in the range from 1300°C to 1550°C.

14. Method according to at least one of Claims 10 to 13, **characterized in that** SiC is used as substance comprising silicon carbide.

15. Method according to at least one of Claims 10 to 14, **characterized in that** SiC (silicon carbide) having an SiO₂ surface layer is used as substance comprising silicon carbide.

16. Method according to at least one of Claims 10 to 15, **characterized in that** a recycled material, preferably composed of kiln furniture, is used as substance comprising silicon carbide.

17. Method according to one or more of Claims 12 to 16, **characterized in that** amorphous or crystalline SiO₂ or a mixture of the two is mixed in in an amount of at least 78% by weight as SiO₂ raw material.

## Revendications

1. Procédé de fabrication d'un matériau réfractaire destiné à une utilisation dans la superstructure de bassins de fusion de verre, qui contient en tant que composants principaux SiO₂, SiC, ainsi qu'un liant ou un mélange de liants, le matériau présentant une teneur en les composants suivants : carbure de silicium de 0,2 % en poids à 20 % en poids ; oxyde de silicium d'au moins 78 % en poids à au plus 6 % en poids ; et autres composants, la somme des composants étant de 100 % en poids ; **caractérisé en ce qu'**une substance particulaire est incorporée dans la matrice du matériau réfractaire, qui présente une capacité d'émission spectrale dans la plage spectrale allant de 1 µm à 5 µm et à des températures supérieures à 1 000 °C qui est supérieure à la capacité d'émission spectrale de la matrice du matériau réfractaire.

2. Procédé selon la revendication 1, **caractérisé en ce que** la substance particulaire contient du carbure de silicium et est mélangée avec au moins une matière première SiO₂ granulée et un liant ou un mélange de liants pour former une masse pouvant être comprimée, moulée en briques, les briques sont séchées, puis calcinées.

3. Procédé selon la revendication 2, **caractérisé en ce que** du SiC est incorporé en une taille de particule < 1,5 mm, de préférence < 1 mm, en tant que substance contenant du carbure de silicium, la teneur en carbure de silicium dans le matériau étant de 0,2 % en poids à 20 % en poids, de préférence de 0,3 % en poids à 15 % en poids, et des sulfonates de lignine, de la dextrine, de la chaux hydratée, des phosphates ou des agents à effet équivalent sont incorporés dans la composition en tant que liant ou mélange de liants en une proportion d'au plus 6 % en poids.

4. Procédé selon les revendications 2 à 3, **caractérisé en ce que** la substance contenant du carbure de silicium comprend une couche de SiO₂.

5. Procédé selon l'une quelconque des revendications 2 à 4 précédentes, **caractérisé en ce qu'**un matériau recyclé, de préférence un adjuvant de combustion, est utilisé en tant que substance contenant du carbure de silicium.

6. Procédé selon une ou plusieurs des revendications 1 à 5, **caractérisé en ce que** du SiO₂ amorphe ou cristallin ou un mélange des deux ayant une teneur en SiO₂ d'au moins 96 % en poids en une granulométrie de 0 à 6 mm, de préférence de 0 à 4 mm, est utilisé en tant que matière première SiO₂ en une quantité d'au moins 78 % en poids.

7. Procédé selon une ou plusieurs des revendications 2 à 6, **caractérisé en ce que** les briques sont calcinées à une température supérieure à 1 200 °C, de préférence comprise entre 1 300 °C et 1 550 °C.

8. Procédé d'augmentation de l'émissivité spectrale de matériaux réfractaires moulés calcinés, **caractérisé en ce qu'**une substance qui présente une émissivité totale au moins 15 % supérieure à l'émissivité de la matrice du matériau réfractaire dans la plage de température supérieure à 1 000 °C est incorporée dans la matrice du matériau réfractaire.

9. Procédé selon la revendication 8, **caractérisé en ce que** le matériau réfractaire consiste en des briques de silice destinées à une utilisation dans la superstructure et les parois latérales de bassins de fusion de verre.

10. Procédé selon les revendications 8 et 9, **caractérisé en ce que** le matériau réfractaire présente une teneur en dioxyde de silicium d'au moins 78 % en poids, et une substance particulaire contenant du carbure de silicium est répartie dans la matrice du matériau réfractaire, la teneur en carbure de silicium dans le matériau étant de 0,2 % en poids à 20 % en poids, de préférence de 0,3 % en poids à 15 % en poids, et celui-ci comprenant au plus 6 % en poids d'autres composants, la somme étant de 100 % en poids.

11. Procédé selon les revendications 8 à 10, **caractérisé en ce que** la matrice présente une teneur en SiO₂ d'au moins 90 % en poids, de préférence d'au moins 94 % en poids.

12. Procédé selon les revendications 10 à 11, **caractérisé en ce que** la substance contenant du carbure de silicium est mélangée avec au moins une matière première SiO₂ granulée et un liant ou un mélange de liants tels que des sulfonates de lignine, de la dextrine, de la chaux hydratée, des phosphates ou des agents à effet équivalent, avec ajout d'eau pour former une masse pouvant être comprimée, moulée en briques, les briques sont séchées, puis calcinées à une température supérieure à 1 200 °C.

13. Procédé selon la revendication 12, **caractérisé en ce que** les briques sont calcinées à une température comprise entre 1 300 °C et 1 550 °C.

14. Procédé selon au moins l'une quelconque des revendications 10 à 13, **caractérisé en ce que** du SiC est utilisé en tant que substance contenant du carbure de silicium.

15. Procédé selon au moins l'une quelconque des revendications 10 à 14, **caractérisé en ce que** du SiC (carbure de silicium) qui comprend une couche de surface de SiO₂ est utilisé en tant que substance contenant du carbure de silicium.

16. Procédé selon au moins l'une quelconque des revendications 10 à 15, **caractérisé en ce qu'**un matériau recyclé, de préférence à base d'adjuvants de combustion, est utilisé en tant que substance contenant du carbure de silicium.

17. Procédé selon une ou plusieurs des revendications 12 à 16, **caractérisé en ce que** du SiO₂ amorphe ou cristallin ou un mélange des deux est incorporé en une quantité d'au moins 78 % en poids en tant que matière première SiO₂.
